# DEMANDE DE BREVET EUROPEEN

(11) **EP 2 248 424 A1**
(43) Date de publication de la demande: **10.11.2010**
(21) Numéro de dépôt: 10170673.7
(22) Date de dépôt: 01.07.2003
(51) Int. Cl.: A01N 63/04, A01N 63/00, A01P 3/00

(54) **Moyens de lutte biologique contre les maladies cryptogamiques des végétaux**

(30) Priorité: 01.07.2002 FR 0208212
(62) Demande divisionnaire de: 03761671.1
(71) Demandeur: UNIVERSITE DE BOURGOGNE, 21078 Dijon Cedex (FR)
(72) Inventeur: Paul, Bernard, 21850 Saint Apollinaire (FR)
(74) Mandataire: Peaucelle, Chantal

(57) **Abrégé**

L'invention concerne l'application de compositions de microorganismes en lutte biologique contre les maladies cryptogamiques de la vigne. Cette composition comprend en mélange au moins une bactérie et au moins une levure, la ou les bactéries et la ou les levures étant non toxiques pour le végétal. Elle vise également des souches bactériennes et de levures, ainsi que des préparations biofongicides renfermant une quantité efficace d'au moins une composition de microorganismes comprenant en mélange au moins une bactérie et au moins une levure, la ou les bactéries et la ou les levures étant non toxiques pour le végétal, ainsi qu'une composition de champignons filamenteux, en particulier du genre Pichia, *Pythium, Trichoderma, Gliocladium, Ampelomyces, Talaromyces, Epicococcum,* en association avec un véhicule inerte.

Application pour le traitement des maladies cryptogamiques des végétaux, notamment des plantes cultivées et de la vigne.

## Description

L'invention vise des moyens, à savoir des compositions et des méthodes, de lutte biologique contre les maladies cryptogamiques des végétaux, c'est-à-dire provoquées par des champignons pathogènes.

La lutte biologique, c'est-à-dire l'utilisation de microorganismes vivants pour combattre les maladies des plantes, suscite un grand intérêt compte tenu des problèmes croissants posés par l'emploi des fongicides chimiques en agriculture. Les nappes phréatiques polluées, les sols contaminés, et la résistance des champignons pathogènes aux fongicides sont en effet autant de défis à surmonter pour l'agriculture moderne.

Dans le domaine viticole par exemple, il s'impose de produire des vins de qualité toujours plus élevée et de réduire les pollutions occasionnées par l'utilisation intensive de produits chimiques.

Des bactéries, comme *Bacillus Thuringiencis,* ou des champignons, comme *Beauveria* ou *Endothia*, ont déjà été proposés comme moyens de lutte biologique.

Or des moyens de grande efficacité et dépourvus de toxicité ont pu être développés par les inventeurs en utilisant des microorganismes en mélange pour lutter contre les maladies cryptogamiques de la vigne. De tels mélanges, non seulement agissent en synergie dans la lutte biologique recherchée, mais exercent en outre, avec avantage, un effet éliciteur.

En outre, il est apparu que des mélanges particuliers de microorganismes étaient particulièrement efficaces pour le traitement des maladies cryptogamiques des végétaux en général.

L'invention a donc pour but l'application de microorganismes en lutte biologique contre les maladies cryptogamiques de la vigne.

Elle vise également à fournir de nouvelles compositions de microorganismes et leur application comme moyens de lutte biologique contre les maladies cryptogamiques des végétaux, plus spécialement des plantes cultivées.

L'application de compositions de microorganismes en lutte biologique contre les maladies cryptogamiques de la vigne est **caractérisée en ce qu**'elle comprend en mélange au moins une bactérie et au moins une levure, la ou les bactéries et la ou les levures étant non toxiques pour le végétal.

De manière avantageuse, la ou les bactéries sont choisies dans les groupes *Bacillus, Pseudomonas, Serratia* ou *Streptomyces.*

Il s'agit en particulier de bactérie(s) de l'espèce *Bacillus megaterium,* et tout spécialement de la souche déposée le 20 Juin 2002 à la CNCM, 25 rue du Dr. Roux, 75724 Paris Cedex 15, sous le N°I-2897 et de bactérie(s) de l'espèce *Bacillus subtilis* déposée le 20 juin 2002 à la même Institution sous le n° I-2940.

La ou les levures des compositions de l'invention sont avantageusement du genre *Debaryomyces ou Pichia.* Il s'agit en particulier de la levure du genre Debaryomyces déposée le 20 Juin 2002 à la CNCM sous le N°I-2896.

L'invention vise en particulier, en tant que nouveaux produits isolés, la souche de *Bacillus megaterium* (BP B**-**01) déposée le 20 Juin 2002 à la CNCM, 25 rue du Dr. Roux, 75724 Paris Cedex 15, sous le N°I-2897 et la souche de *Bacillus subtilis* (BP B-10) déposée à la CNCM le 20 juin 2002 sous le n°I-2940.

L'invention vise également, en tant que nouveau produit isolé, la levure du genre *Debaryomyces* (BP Y-01) déposée le 20 juin 2002 à la CNCM sous le n°I-2896.

Les souches de bactéries et de levures de l'invention sont avantageusement sélectionnées à partir de microorganismes du sol ou prélevées sur le végétal à traiter. Elles ne perturbent donc pas l'équilibre biologique de l'écosystème puisqu'elles en sont issues.

Les compositions de ces microorganismes permettent de traiter les principales maladies fongiques des végétaux et sont donc particulièrement appropriées pour élaborer des préparations biofongicides.

Des préparations de l'invention sont caractérisées en ce qu'elles renferment une quantité efficace d'au moins une composition de microorganismes comprenant en mélange au moins une bactérie et au moins une levure, la ou les bactéries et la ou les levures étant non toxiques pour le végétal, ainsi qu'une composition de champignons filamenteux, en particulier du genre *Pichia, Pythium, Trichoderma, Gliocladium, Ampelomyces, Talaromyces, Epicococcum* en association avec un véhicule inerte.

Le véhicule utilisé est notamment capable d'assurer une bonne dispersion et adhésion des microorganismes sur la partie aérienne de la plante.

Des préparations biofongicides préférées sont caractérisées en ce qu'elles renferment une quantité efficace des souches bactériennes et de la souche de levure déposées à la CNCM, tel que défini plus haut. De manière préférée, les préparations biofongicides de l'invention sont caractérisées par des concentrations en levures de 0,5 à 0,75X10¹⁰ et en bactéries de 0,30 à 0,50X10¹⁰.

Ces préparations présentent un large spectre d'efficacité face aux champignons pathogènes et sont avantageusement utilisées pour le traitement des maladies cryptogamiques des végétaux, notamment des plantes cultivées, en particulier des parties aériennes par exemple vigne, tomate, fraise, blé, pomme de terre, tabac, canne à sucre, maïs, riz, arbres fruitiers, de tubercules par exemples de pommes de terre ou de betterave.

L'efficacité a été également particulièrement remarquée sur les plantes maraîchères.

Elles sont appliquées par exemple au traitement de l'oïdium, du mildiou, et du *Botrytis* de la vigne, ainsi que des maladies du bois (esca ou eutypa).

Ces préparations présentent également l'avantage d'exercer un effet d'éliciteur qui se traduit par une activation des défenses naturelles de la plante contre les agresseurs d'origine fongique.

Les traitements sont effectués notamment par pulvérisation sur les parties aériennes avec des préparations renfermant la ou les bactéries et la ou les levures, avec des quantités modulables selon la pression des pathogènes. Des préparations appropriées renferment par exemple lesdites bactéries et levures dans un rapport d'environ 50/50%.

On notera que l'application de ces traitements ne nécessite aucun changement de matériel de la part de l'utilisateur.

Selon une disposition supplémentaire de l'invention, le traitement est complété le cas échéant à l'aide d'une composition de champignons, plus spécialement de champignons filamenteux, en particulier du genre *Pythium, Trichoderma, Gliocladium, Ampelomyces, Talaromyces, Epicococcum.*

Après l'application, les souches de la préparation ne restent que quelques jours sur la plante avant de mourir et de se dégrader. Leur présence dans le sol n'est pas supérieure à un taux normalement constaté et est nulle au-delà de trente centimètres de profondeur.

Ces mélanges de microorganismes n'apportent donc aucune nouvelle forme de pollution.

L'invention vise également la mise à profit de l'effet éliciteur des mélanges de microorganismes de l'invention pour produire des composés d'intérêt, comme le resvératrol, molécule présentant notamment un effet protecteur du système cardiaque,ou encore le ptérostilbène, en quantités plus élevées que celles produites par la vigne à la suite d'une élicitation telle que celle produite par *Botrytis.*

L'invention vise ainsi un procédé de production de resvératrol et/ou de ptérostilbène, comprenant l'application à un végétal, notamment la vigne, d'une composition de microorganismes telle que définie plus haut, et la récupération du resvératrol et/ou de ptérostilbène par exemple par extraction.

Le resvératrol est utilisable pour la fabrication de médicaments notamment à visée cardio-vasculaire, en cosmétologie ou comme nutricament. Le ptérostilbène est utilisable comme antifongique.

D'autres caractéristiques et avantages de l'invention apparaîtront dans les exemples qui suivent donnés aux fins d'illustration de l'invention et en se reportant à figure unique qui présente la production de resvératrol avec différentes combinaisons de bactéries et/ou levures et/ou champignons.

### Exemple I : Isolement et culture de la souche de bactéries BP B01 et de la levure BP Y01 :

L'isolement est réalisé comme suit :
Les deux microorganismes sont cultivés sur un milieu nutritif solide le PDA (Potato dextrose agar). Les deux microorganismes sont ensemencés séparément dans des fermenteurs de 20 litres contenant du PDB (Potato dextrose broth). Les levures sont cultivées à 28°C et les bactéries à 37°C. Les microorganismes ainsi préparés sont centrifugés et le culot de bactéries et levures est récupéré séparément dans l'eau distillée stérile. Au moment du traitement du végétal, les deux microorganismes sont mélangés. Le vignoble subit trois traitements par mois, d'avril à août, donc un total de 10 à 12 traitements par le mélange de l'invention pour la saison. Le produit préparé par fermentation est utilisé pour toute la saison, chaque litre contenant de 0,5-0,75X10¹⁰ pour les levures et 0,30-0,50X10¹⁰ pour les bactéries, à raison de 1 litre par pied de vigne.

### Caractérisation de l'ADN génomique de BP B01 et de BP B10

L'isolement de l'ADN génomique de BP B01 et de BP B10, ainsi que l'amplification de leur zone ITS, entre les gènes 16S et 23S a été réalisée selon Chen, W. Schneider RW, et Hoy J.W. 1992, Phytopathology, 82, p 1234-1244. Les séquence**s** correspondante**s** SEQ ID N°1 et SEQ ID N°3 ont été déposées au GENBANK (N° d'accès respectifs AY 125961 et AY 157575).

La levure BP Y01 a été isolée de baies de raisins provenant de différents vignobles de la région de Bourgogne.

L'ADN génomique de BP Y01 a été isolé et la zone ITS, entre les gènes 18S et 28S amplifiée selon les méthodes ci-dessus.

Le fragment ITS1 se trouve entre les gènes 18S et 5,8 S, tandis que ITS2 se trouve entre les gènes 5,8 S et 28 S. La séquence SEQ ID N°2 a été déposée au GENBANK (N° d'accès AY 125962).

### Résultats de lutte biologique sur le cépage chardonnay en 1999 et 2000 au Centre Expérimental de Marsannay - La Côte, France (Université de Bourgogne)

| **Année :1999** | **Résultats** |
|---|---|
| Nombre de pieds | 450 |
| témoins non traités | 10 |
| Nombre de traitements | 15 |
| Type d'inoculum | Bactéries + Levures |
| Protection | 39 pieds malades (Mildiou), *O Botrytis* |
| Témoins | Mildiou puis *Botrytis* sur tous les pieds, intervention chimique |

| **Année :2000** | **Résultats** |
|---|---|
| Nombre de pieds | 241 |
| Nombre de traitements | 14 |
| Type d'inoculum | Bactéries + Levures |
| Protection | 27 pieds malades (Mildiou), *O Botrytis* |
| Témoins | Mildiou puis *Botrytis* sur tous les pieds |

### Résultats de lutte biologique sur le cépage pinot-noir en 2000 et 2001 au Centre Expérimental de Marsannay - La Côte, France (Université de Bourgogne)

| **Année :2000** | **Résultats** |
|---|---|
| Nombre de pieds | 120 |
| témoins non traités | 13 |
| Nombre de traitements | 14 |
| Type d'inoculum | Bactéries + Levures |
| Témoins | Mildiou puis *Botrytis* sur tous les pieds |
| Protection | 11 pieds malades (Mildiou), *O Botrytis* |

| **Année :2001** | **Résultats** |
|---|---|
| Nombre de pieds | 614 |
| Nombre de traitements | 13 |
| Traitement chimique | 02 |
| témoins non traités | 13 |
| Type d'inoculum | Bactéries + Levures |
| Témoins | Mildiou + *Botrytis* sur tous les pieds |
| Protection | 53 pieds malades (Mildiou), qques grappes infectées par *Botrytis* |
| Rendement | 1,18 kg de raisin par pied au lieu de 1,2-1,5 kg |

De manière générale, on note, en plus de l'effet fongicide et d'éliciteur des préparations utilisées, une amélioration de la qualité de la vendange. On constate notamment une augmentation de la concentration en sucre qui permet de réduire ou d'éviter la chaptalisation. De plus, le taux de resvératrol est augmenté. Enfin, les taux de tanin et d'anthocyanes sont en augmentation, ce qui accorde une meilleure charpente et une couleur plus vive au vin.

Les résultats concernent l'augmentation de resvératrol sont illustrés par l'histogramme de la figure unique qui donne en ug/gm de poids frais la production de resvératrol au 3^{ème} jour après addition respectivement de : BP Y01 (levure déposée à la CNCM); BP B01 (bactérie déposée à la CNCM); BC 03 (*botrytis cinerea*); BP Y01 + B C03; BPB 01 + B C03; BP Y01 + BP B01; BP B01 + BP Y01 + B C03.

L'examen de cet histogramme montre que la formation de resvératrol augmente lorsqu'on ajoute le mélange levure/bactérie de l'invention au champignon *Botrytis*.

Compte tenu de l'ensemble de ces propriétés, les compositions utilisées comme préparations fongicides, selon l'invention, constituent une réponse particulièrement satisfaisante aux problèmes fongiques posés aux cultivateurs, notamment aux viticulteurs et à l'impératif de réduction des pollutions d'origine agricole en constituant des substituts aux produits chimiques.

## Revendications

1. Application de compositions de microorganismes en lutte biologique contre les maladies cryptogamiques de la vigne, **caractérisée en ce qu'**elle comprend en mélange au moins une bactérie et au moins une levure, la ou les bactéries et la ou les levures étant non toxiques pour le végétal.

2. Application selon la revendication 1, **caractérisée en ce que** la ou les bactéries sont choisies dans les genres *Bacillus, Pseudomonas, Serratia, Streptomyces.*

3. Application selon la revendication 2, **caractérisée en ce que** la ou les bactéries sont de l'espèce *Bacillus megaterium* et/ou de l'espèce *Bacillus subtilis.*

4. Application selon l'une quelconque des revendications 1 à 3, **caractérisée en ce que** la ou les levures sont du genre *Debaryomyces ou Pichia.*

5. Souche bactérienne, **caractérisée en ce qu'**il s'agit de la souche de *Bacillus megaterium* (BP B-01) déposée le 20 juin 2002 à la CNCM sous le N°I-2897.

6. Souche bactérienne, **caractérisée en ce qu'**il s'agit de la souche de *Bacillus subtilis* (BP B-10) déposée le 20 juin 2002 à la CNCM sous le n° I-2940.

7. Souche de levure, **caractérisée en ce qu'**il s'agit de la levure du genre *Debaryomyces* (BP Y-01) déposée le 20 Juin 2002 à la CNCM sous le N°I-2896.

8. Préparation biofongicide, **caractérisée en ce qu'**elle renferme une quantité efficace d'au moins une composition de microorganismes comprenant en mélange au moins une bactérie et au moins une levure, la ou les bactéries et la ou les levures étant non toxiques pour le végétal, ainsi qu'une composition de champignons filamenteux, en particulier du genre *Pichia*, *Pythium, Trichoderma, Gliocladium, Ampelomyces, Talaromyces, Epicococcum,* en association avec un véhicule inerte.

9. Préparation biofongicide selon la revendication 8, **caractérisée par** des concentrations en levures de 0,5 à 0,75X10¹⁰ et en bactéries de 0,30 à 0,50X10¹⁰.

10. Préparation biofongicide, **caractérisée en ce qu'**elle renferme une quantité efficace d'un mélange des souches selon les revendications 5 à 7.

11. Application d'une préparation selon l'une des revendications 8 à 10, au traitement des maladies cryptogamiques des végétaux, notamment des plantes cultivées, en particulier des parties aériennes par exemple vigne, tomate, fraise, blé, tabac, canne à sucre, maïs, riz, arbres fruitiers, de tubercules par exemples de pommes de terre ou de betterave.

12. Application d'une préparation selon l'une des revendications 8 à 10 au traitement de l'oïdium, du mildiou ou du *Botrytis* de la vigne, et d'*eutypa* et *esca.*

13. Application selon la revendication 11 ou 12, **caractérisée en ce qu'**elle comprend un traitement notamment par pulvérisation avec la ou les bactéries et la ou lesdites levures, selon la pression des pathogènes, notamment selon un rapport d'environ 50/50%.

14. Application selon l'une quelconque des revendications 11 à 13, **caractérisée en ce qu'**elle comprend en outre un traitement à l'aide d'une composition de champignons filamenteux, en particulier du genre *Pichia, Pythium, Trichoderma, Gliocladium, Ampelomyces, Talaromyces, Epicococcum.*

15. Application de la préparation biofongicide selon l'une quelconque des revendications 8 à 10 comme agent éliciteur pour la production de substances d'intérêt par le végétal traité, en particulier de resvératrol.
